# EUROPÄISCHE PATENTANMELDUNG

(11) **EP 3 798 291 A1**
(43) Veröffentlichungstag der Anmeldung: **31.03.2021**
(21) Anmeldenummer: 20198179.2
(22) Anmeldetag: 24.09.2020
(51) Int. Cl.: C11D 3/00

(54) **MITTEL UND VERFAHREN**

(30) Priorität: 24.09.2019 DE 102019125689
(71) Anmelder: Weber Lucie, 53119 Bonn (DE)
(72) Erfinder: WEBER, Lucie, 53119 Bonn (DE); KOPPELMANN, Janine, 50733 Köln (DE)
(74) Vertreter: Roche, von Westernhagen & Ehresmann

(57) **Zusammenfassung**

Die Erfindung betrifft unter anderem ein Mittel zum Emulgieren und/oder zum Entfernen von Verschmutzungen, wie ölhaltigen Stoffen, Schmierstoffen, Klebstoffen oder dergleichen, von Oberflächen, umfassend mindestens die folgenden Bestandteile
a) FAME,
b) ein Gemisch, umfassend:
i) Rhamnolipide und/oder Sophorolipide,
ii) Lösemittel,
wobei FAME wenigstens einen Stoff aus der folgenden Gruppe von Stoffen umfasst:
"FME, SME, RME, PME",
und wobei die Rhamnolipide in Reinform oder als Gemisch vorliegen, wobei das Gemisch mindestens 70 % Anteile Rhamnolipide umfasst,
wobei das Lösemittel wengistens einen Stoff aus der nachfolgenden Gruppe von Stoffen umfasst:
"Demineralisiertes Wasser, Polyethylenglycol; Polysaorbat 20; Benzylalkohol; Isopropylalkohol; Ethanol; Mono Ethylenglycol; N,N-bis(carboxylatomethyl)-L-glutamat, Tetranatriumsalz; D-Glucopyranose, Olgomere, C10-16 alkyl glycoside; Gemische aus Bernsteinsäureesther und Pflanmethylestern, Bernsteinsäureesther C4; Ethyllactat (Milchsäureethylester); Dipropylenglykoldimethylether (DPMD); Ethyl 3-Ethoxypropionat (EEP); TOU (2,5,7,10-Tetraoxaundecan), Propylencarbonat; Dibasische Ester (DBE); ter-Butylacetat (TBAC); Propylenglycol Methyletheracetat (PGMEA); 2,3-O-Isopropylidenglycerin; 3-Methoxy-3-Methyl-1-Butanol".

## Beschreibung

Die Erfindung betrifft gemäß einem ersten Aspekt ein Mittel und Verfahren zum Emulgieren, Dispergieren, Lösen, Entfetten und Entfernen von Öl- und/oder Schmier- und/oder Klebstoffen auf Oberflächen. Das Mittel gemäß der Erfindung wird auf Basis von Fettsäuremethylester, hier auch als FAME bezeichnet, hergestellt.

Das erfindungsgemäße Mittel kann ein FAME oder ein Gemisch mehrerer der folgenden FAME umfassen:
Sojamethylester, hier auch als SME bezeichnet, Rapsmethylester, hier auch als RME bezeichnet, und -Palmmethylester, hier auch als PME bezeichnet, Fettmethylester, hier als FME bezeichnet.

Das Mittel kann auch einen Supramolekularcomplex umfassen, bestehend aus: Rhamnolipiden, insbesondere des Stammes Pseudomas aeruginosa, welcher aus mindestens 70 % Rhamnolipidanteilen, mindestens 0,1 % Alginatanteil und mindestens 0,1% Pyroverdine und mehr als 1% Wasser besteht.

### Stand der Technik:

Oberflächen aus Metall, Kunststoff und anderen Materialien werden häufig bei industriellen Verarbeitungsprozessen, z. B. beim Fräsen, Schneiden, Sägen, Bohren, mit verschiedenen Ölen, Fetten zum Herabsetzen des Reibungswiderstandes, oder zur Kühlung und deren besseren Verarbeitung, benetzt. Nach der Bearbeitung müssen die Werkstücke, zum Beispiel auf sogenannten Waschtischen, von den aufgetragenen Ölen/Fetten und dem Abrieb befreit oder gereinigt werden. Dies wird heute zum Beispiel mit organischen Lösemitteln und/oder sogenannten Kaltreinigern gemacht.

Kaltreiniger sind Gemische verschiedener organischer Lösemittel, die zum Entfetten und Reinigen von Werkstücken, Autoteilen u. ä. geeignet sind. Kaltreiniger werden auf Basis von: Naphtha Verbindungen Cas:Nr. 64742-48-9; Organische Lösemittel Alkane C9 - C12 ISO Cas.Nr. 90622-57-4, Alkane C10 - C13, n-Alkane, cyclisch aromatisch, EG-Nr. 919-164-8, hergestellt. Es werden je nach Einsatzgebiet Acetat-Reiniger, die auf Basis von entromantisierten Kohlenwasserstoffen, oder auf synthetischer Isoparaffine, oder isoparafinischer Kohlenwasserstoffe, oder paraffinischer Kohlenwasserstoffe hergestellt sind, verwendet.

In der Regel sind es also lösemittelhaltige Reinigungs- und Entfettungsmittel, die direkt und unverdünnt zur Werkstückreinigung, am Waschtisch, im Sprüh- oder Tauchverfahren, aber auch manuell mittels Pinsel, Bürste, Schwamm oder Lappen, aufgetragen werden.

Kaltreiniger werden oft als "Sicherheitsreiniger" angesehen, da sie im Gegensatz zu Chemikalien wie Trichloräthan oder Benzin, weniger gefährlich sind. Insbesondere beim Verschlucken kann es zu Vergiftungen kommen. Schleimhaut- und Hautkontakt kann zu Reizungen führen. Regelmäßiger Hautkontakt entfettet die Haut und begünstigt Hauterkrankungen. Das Tragen ausreichender persönlicher Schutzausrüstung, wie Hautschutzcreme oder Handschuhe, Schutzbrille, Atemschutz oder Schutzkleidung ist daher erforderlich.

Kaltreiniger können brand- und explosionsgefährlich sein. Beim Erhitzen können sich Bestandteile des Kaltreinigers zersetzen und giftige Gase bilden.

Das Recycling verschmutzter Kaltreiniger wird dadurch erschwert, dass sie Gemische verschiedener kurz- und langkettiger organischer Stoffe sind und dadurch, dass sie nach Gebrauch zusätzliche organische und anorganische Verunreinigungen enthalten. Eine einfache Wiederverwendung nach Aufbereitung durch Destillieren, wie sie bei Benzin oder Tetra möglich ist, kommt daher nicht infrage.

Nach einer meist mehrstufigen mechanischen Abscheidung und Filterung erfolgt eine zwei- oder mehrstufige Vakuumdestillation zur Abtrennung leicht und schwer flüchtiger Bestandteile. Danach kann eine Behandlung mit Schwefelsäure und Neutralisation zum Entfernen organischer Bestandteile erfolgen.

Je nach Zusammensetzung des Kaltreinigers müssen danach ggf. einige seiner Bestandteile erneut zugegeben werden, da sie mit abgeschieden worden sind.

Problematisch ist beim Einsatz von Lösemitteln- und Kaltreiniger die Umweltverträglichkeit, Geruchsbelästigung, Arbeitsschutz, Nachhaltigkeit sowie die Entsorgung der kontaminierten Reinigungsflüssigkeit und das aufwendige Wiederaufbereiten der Abwaschflüssigkeit und der darin enthaltenen Verunreinigungen.

Weiterhin sind die Kaltreiniger nur in der Lage, die Verschmutzung zu lösen, und nicht zu Emulgieren.

Das Entfernen der Schmierstoffe, insbesondere nach längerem Einsatz, bei Transportbändern, Seilbahnen, Förderbändern, Tragseilen, Zügen, Schiffschrauben, Militärfahrzeugen, sowie das Lösen von Ölen, Fetten, Teer, Bitumen, Kunststoffen, Harzen, Lacken und den anhaftenden Verunreinigungen durch Metall - Kunststoffabrieb und sonstigen Verunreinigungen ist nur mit den bekannten Lösemittel-KaltReinigern unter Inkaufnahme von umwelt- und gesundheitsschädlichen Folgen möglich.

Ebenso werden anorganische saure oder alkalische Reiniger, die nicht als Kaltreiniger bezeichnet werden, mit dem Einsatz von höheren Temperaturen verwendet.

Diese Reiniger können aus verschiedenen Bestandteilen bestehen:
- Wasser
- Alkohole
- Halogenkohlenwasserstoffe
- Ketone
- andere Kohlenwasserstoffe (Benzine)
- anorganische Beimischungen wie Alkalien und Säuren
- Farbstoffe und Geruchsstoffe

Schmierstoffe können vielfältig und je nach Einsatzfall allein oder kombiniert erforderlich sein. Neben der Primäranforderung an den Schmierstoff - maximale Kraftübertragung bei minimaler Reibung und minimalem Verschleiß - müssen oftmals unterschiedliche Sekundäreigenschaften erfüllt werden, wie z.B. Wasserbeständigkeit, Chemikalienbeständigkeit, Kunststoffverträglichkeit oder Korrosionsschutz.

Pasten entsprechen im Grundsatz den Fetten. Allerdings ist der Anteil an Festschmierstoffen deutlich höher. Dadurch wird eine sichere Schmier-, Trenn- und Korrosionsschutzwirkung auch beim Einsatz unter extremer Temperatur und Druckbedingungen und aggressiven Medien gewährleistet. Pasten werden bei Schraubverbindungen ebenso eingesetzt wie beim Einpressen von Stiften und Bolzen, bei Zahnrädern, Spannfuttern, Gelenken und Gleitlagerungen.

Fette bestehen aus einem Grundöl, das durch einen Verdicker (Seife) gebunden wird. Dadurch verbleibt der Schmierstoff an der Schmierstelle. Dort gewährleistet er einen dauerhaft wirksamen Schutz gegen Reibung und Verschleiß und dichtet die Schmierstelle gegen äußere Einflüsse wie Feuchtigkeit und Fremdstoffe ab. Fette finden häufig Anwendung bei Wälz- und Gleitlagern, Spindeln, Armaturen, Dichtungen, Führungen aber auch bei Ketten und Getrieben.

Die Zusammensetzung von Schmierstoffen:
Moderne Schmierstoffe bestehen aus einer Vielzahl von Bestandteilen. Bei den meisten Schmierstoffen bildet das sogenannte Basisöl den wichtigsten Teil der Rezeptur. Weitere Komponenten sind unter anderem Verdicker, Festschmierstoffe und Additive. Durch eine sorgfältige Auswahl der Inhaltstoffe können Schmierstoffe mit unterschiedlichen Eigenschaften produziert werden.

Das Basisöl gibt dem Schmierstoff seine grundlegenden Eigenschaften und kann aus verschiedenen Produkten gewonnen werden. Häufig kommen hier hochraffinierte Mineralöle zum Einsatz, die sich vor allem durch ein ausgewogenes Leistungsbild, hervorragende Qualität und eine hohe Verfügbarkeit auszeichnen. In vielen modernen Schmierstoffen setzt man heute auf synthetischer Basis Öle, wie z.B. Polyalphaolefine, Esteröl oder Polyglykole, ein. Sie weisen eine höhere thermische Stabilität auf, sind beständiger gegen Oxidation und den Einfluss von Chemikalien. Außerdem greifen die meisten dieser Schmierstoffe moderne Werkstoffe, wie zum Beispiel Kunststoffe, Composite oder Dichtungsmaterialien, nicht an.

### Verdicker

Ein Verdicker sorgt für einen Anstieg der Viskosität. Damit kann zum Beispiel ein Schmieröl so stark eingedickt werden, dass es eine gallertartige Konsistenz aufweist. Deshalb werden Verdicker manchmal auch als Konsistenzgeber bezeichnet. So lässt sich aus einem Basisöl mit Hilfe von Verdickern ein Schmierfett produzieren. Dabei gibt es die Möglichkeit, die Konsistenz ganz nach Belieben einzustellen und so - von geschmeidigen Fließfetten bis zu steifen Blockfetten - Produkte für diverse Anwendungsbereiche zu produzieren. Zudem können die Verdicker die Eigenschaften des Schmierfetts positiv beeinflussen und so zum Beispiel die Resistenz gegen Wasser oder Chemikalien stark verbessern. Als organische Verdicker kommen z. B. Polyharnstoff, anorganische Verdicker wie Bentonit, oder Kieselgel, infrage.

### Festschmierstoffe

Festschmierstoffe vermindern aufgrund ihres Aufbaus zum einen die Reibung, können aber darüber hinaus einem Produkt auch Korrosionsschutzschutzeigenschaften geben. Festschmierstoffe erhöhen die Druckfestigkeit eines Schmierstoffes und werden deshalb unter anderem in Montagepasten eingesetzt.

Schmierfette sind unter anderem, Aluminiumseife, Aluminiumkomplexseife, Calziumseife, Calziumkomplexseife, Lithiumseife, Natriumseifen.

### Additive

Um spezielle Eigenschaften in einem Produkt zu erzeugen, setzt man bei der Formulierung von Schmierstoffen Additive ein. Diese können bestimmte Eigenschaften entweder fördern oder unterdrücken. So lässt sich eine ganze Reihe von Verbesserungen, zum Beispiel in Bezug auf Temperatur- oder Duck Beständigkeit, Wasserabweisung, Benetzungsvermögen, Oxidationsstabilität oder Korrosionsschutzeigenschaften erreichen.

### Multifunktionsöle oder Mehrzweckfette

Schmierstoffe sind meistens auf einen bestimmten Bereich zugeschnitten, eignen sich jedoch häufig auch für andere Anwendungen. Sogenannte Multifunktionsöle oder Mehrzweckfette bieten dem Verwender einen großen Bereich von Anwendungsmöglichkeiten und eine hohe Flexibilität. Grundsätzlich richtet sich ihre Zusammensetzung nach dem späteren Einsatzbereich, da die späteren Anforderungen maßgeblich für die Auswahl der Inhaltstoffe sind.

Schmierstoffe (auch: Schmiermittel) werden zur Schmierung eingesetzt und dienen zur Verringerung von Reibung und Verschleiß sowie zur Kühlung, Schwingungsdämpfung, Dichtwirkung und dem Korrosionsschutz.

Prinzipiell bestehen alle Schmierstoffe aus einer Basisflüssigkeit (meistens Grundöl) sowie aus weiteren Inhaltsstoffen, welche man Additive nennt.

Schmierstoffe unterliegen verschiedenen Einflüssen:
- mechanische Einflüsse (Druck- und Scherspannungen an der Schmierstelle)
- thermische Einflüsse (Wärme zu- abfuhr)
- chemische Wechselwirkungen mit anderen Stoffen (Blow-by-Gasen, Nitrierung durch Kraftstoffe, Reibpartnern, Dichtungen ...) und der Umgebung (zum Beispiel Luft, Wasser, Luftfeuchtigkeit)
- Schmierstoffalterung

Die folgende Einteilung unterscheidet nach dem Aggregatzustand des Schmierstoffes:
- flüssige Schmierstoffe (Schmieröle und Kühlschmierstoffe)
- Schmierfette
- Festschmierstoffe (zum Beispiel Graphit)
- gasförmige Schmierstoffe (zum Beispiel Luft)

Wichtige physikalische Kennwerte von Schmierstoffen sind u.a.:
- Dichte
- Viskosität
- Anilinpunkt (AP)
- Tropfpunkt
- Stockpunkt, Pour Point
- Flammpunkt, Brennpunkt, Entzündungspunkt
- Neutralisationsvermögen

Weitere Anwendungsbeispiele von Schmierstoffen:
- Eine hygienisch einwandfreie industrielle Verarbeitung von Lebensmitteln bedingt für alle lebensmittelberührenden Teile von Maschinen eine Schmierung mit physiologisch verträglichen Schmierstoffen, z. B. natürlichen Fetten und Ölen mit einer Zulassung der US-amerikanischen Food and Drug Administration (FDA) bzw. des Department of Agriculture. Diese Forderung ist in den Regelwerken International Food Standard (IFS) und des British Retail Consortiums (BRC) enthalten.
- Eine weitere industrielle Anwendung von Schmierstoffen ist die Verwendung als Umformschmierstoff in verschiedenen Ausführungen. Hier gibt es Emulsionen, die vorwiegend in der Zerspanung als Kühlschmierstoff eingesetzt werden. Hier wird ein Schmierstoffkonzentrat in einer 3-10-%-igen Emulsion mit Wasser erzeugt und dieses über Umwälzpumpen dem Zerspanungsprozess immer wieder zugeführt.
- Ein weiterer Einsatzbereich ist die Blechumformtechnik. Hier werden Umformschmierstoffe in verschiedenen Formen als mineralölbasierte Umformöle mit verschiedenen Additivierungen eingesetzt. Weiterhin kommen Esteröl-basierte Umformöle mit Hochleistungs oder EP-Additivierungen zum Einsatz, die bei anspruchsvolleren Umformaufgaben eingesetzt werden. Im Bereich der einfacheren Umformung großflächiger Teile werden auch gerne verflüchtigende lösemittelhaltige Schmierstoffe eingesetzt, die verdunsten, wenn Teile weiterverarbeitet werden. Als Alternative zu den lösemittelhaltigen Schmierstoffen gibt es Bio-Polymer-Schmierstoffe, die mineralölfreie Lösungen auf Basis von biogenen Polymeren sind. Diese werden mit einem Korrosionsschutz und einer wasserlöslichen Additivierung für die Anforderungen der Blechumformung ausgestattet. Bei diesen Schmierstoffen ist bei der Weiterverarbeitung, wie auch bei der verflüchtigenden Schmierstoffen kein Waschen der Teile mehr erforderlich, da nach der Umformung nahezu nur noch der Korrosionsschutz auf dem Bauteil verbleibt.

### Natürliche Öle, Fette und Wachse

Typische Beispiele für Fette und Öle sind Glyceride, d. h. feste oder flüssige pflanzliche oder tierische Produkte, die im Wesentlichen aus gemischten Glycerinestern höherer Fettsäuren bestehen. Als Wachse kommen u. a. natürliche Wachse, wie z. B. Bienenwachs, Bürzelfett, Candelillawachs, Carnaubawachs, Ceresin, Espartograswachs, Guarumawachs, Japanwachs, Korkwachs, Lanolin (Wollwachs), Mikrowachse, Montanwachs, Ozokerit (Erdwachs), Petrolatum, Paraffinwachse, Ouricourywachs, Reiskeimölwachs, Schellackwachs, Sonnenblumenwachs, Fruchtwachse wie Orangenwachse, Zitronenwachse, Grapefruitwachse, Zuckerrohrwachs, chemisch modifizierte Wachse (Hartwachse), wie z. B. Montanesterwachse, Sasolwachse, hydrierte Jojobawachse, hydriertes Rinzinusöl sowie synthetische Wachse, wie z. B. Polyalkylenwachse und Polyethylenglycolwachse in Frage. Neben den Fetten kommen als Zusatzstoffe auch fettähnliche Substanzen, wie Lecithine und Phospholipide in Frage. Als Beispiele für natürliche Lecithine seien die Kephaline genannt. Daneben kommen auch Sphingosine bzw. Sphingolipide in Frage. Desweiteren sind auch Mischungen der genannten Öle und Wachse möglich.

### Perlglanzwachse

Als Perlglanzwachse kommen beispielsweise in Frage: Alkylenglycolester, speziell Ethylenglycoldistearat; Fettsäurealkanolamide, Partialglyceride, Ester von mehrwertigen, gegebenenfalls hydroxysubstituierte Carbonsäuren mit Fettalkoholen mit 6 bis 24 Kohlenstoffatomen, Fettstoffe, wie beispielsweise Fettalkohole, Fettketone, Fettaldehyde, Fettether und Fettcarbonate in Frage.

Schmieröle sind die wichtigsten technischen Schmierstoffe. Sie dienen zur Verringerung von Reibung, die Geräuschentwicklung und besonders Materialverschleiß verursacht. Darüber hinaus ermöglicht die Verwendung von Schmieröl auch die Wärmeabfuhr. Schmieröl bildet zwischen bewegten Flächen, etwa in einem Scharnier, einen Gleitfilm; näheres dazu im Artikel Schmierung. Bei anspruchsvollen Umgebungen, die zum Beispiel Regen oder Staub ausgesetzt sind, nutzt man Schmierfette, welche die Lagerstellen beziehungsweise Wälzlager auch gegen äußere Einflüsse abschirmen können und länger an der Schmierstelle verbleiben, da sie viskoser (zäher) sind.

Biogene Schmierstoffe bestehen z. B. aus pflanzlichen Ölen und tierischen Fetten. Zum Einsatz im Stand der Technik kommen auch mineralische Öle, synthetische Öle, mit unterschiedlicher Viskosität, je nach Anwendung: Maschinenöl, Motoröl ,Getriebeöl, Öl für feinwerktechnische Geräte, z. B. Nähmaschinenöl, Kettenöl, Hydrauliköl, Kühlschmiermittel, Schneidöle.

### Aufgabe der Erfindung:

Ausgehend von den oben beschriebenen Mitteln des Standes der Technik besteht die Aufgabe der Erfindung darin, ein geändertes Mittel - und gemäß einem weiteren Aspekt der Erfindung ein Verfahren - anzugeben, welches Verschmutzungen auf besonders gute und sichere Weise löst.

Die Erfindung löst diese Aufgabe mit den Merkmalen des Anspruches 1 und - unabhängig davon - durch ein Verfahren nach Anspruch 6.

Das erfindungsgemäße Mittel umfasst zumindest zwei Bestandteile, nämlich mit einem ersten Bestandteil FAME und mit einem zweiten Bestandteil ein Gemisch.

Der Bestandteil FAME umfasst wenigstens einen Stoff aus der folgenden Gruppe von Stoffen:
"FME, SME, RME, PME".

Der zweite Bestandteil, das Gemisch, umfasst Rhamnolipide und/oder Sophorolipide. Darüber hinaus umfasst das Gemisch ein Lösemittel.

Das Lösemittel umfasst wenigstens einen Stoff aus der nachfolgenden Gruppe von Stoffen:
"Demineralisiertes Wasser, Polyethylenglycol; Polysaorbat 20; Benzylalkohol; Isopropylalkohol; Ethanol; Mono Ethylenglycol; N,N-bis(carboxylatomethyl)-L-glutamat, Tetranatriumsalz; D-Glucopyranose, Olgomere, C10-16 alkyl glycoside; Gemische aus Bernsteinsäureesther und Pflanmethylestern, Bernsteinsäureesther C4; Ethyllactat (Milchsäureethylester); Dipropylenglykoldimethylether (DPMD); Ethyl 3-Ethoxypropionat (EEP); TOU (2,5,7,10-Tetraoxaundecan), Propylencarbonat; Dibasische Ester (DBE); ter-Butylacetat (TBAC); Propylenglycol Methyletheracetat (PGMEA); 2,3-O-Isopropylidenglycerin; 3-Methoxy-3-Methyl-1-Butanol".

Soweit das Gemisch Rhamnolipide aufweist, liegen die Rhamnolipide entweder in Reinform oder als Gemisch vor. Wenn die Rhamnolipide als Gemisch vorliegen, umfasst das Gemisch mindestens 70% Anteile Rhamnolipide.

Nachfolgend werden einige Definitionen der in dem erfindungsgemäßen Mittel zum Einsatz kommenden Stoffe angegeben:

### Definition FAME:

Im Sinne der vorliegenden Patentanmeldung werden als FAME Fettsäuremethylester bezeichnet. Diese können auf der Basis von verschiedenen Ölen und/oder Fetten gewonnen werden.

Als FAME werden im Sinne der Erfindung die Stoffe SME, RME, PME und FME bezeichnet, die nachfolgend erläutert werden:

### Definition SME:

Sojamethylester, hier auch als SME bezeichnet, sind ein Gemisch von Methylestern, das aus gesättigten und ungesättigten Fettsäuren mit 16 bis 22 Kohlenstoffen besteht. Durch die chemische Umsetzung von raffiniertem Sojaöl mit Methanol wird Sojamethylester als klare, dünnflüssige, brennbare und in Wasser unlösliche Flüssigkeit gewonnen. SME wird bei der Herstellung unter Zugabe von Methanol zum Sojaöl in einer katalytischen Reaktion zum Sojamethylester; als Nebenprodukt fällt Rohglycerin an. Die SME-Bildung erfolgt durch Umsetzen von Sojaöl mit Methanol nachfolgender Reaktionsgleichung:

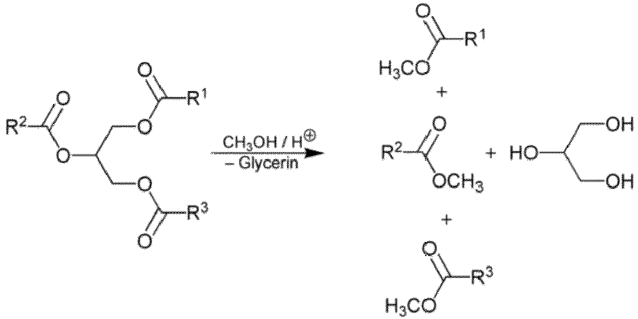

### Definition RME:

Rapsmethylester, hier auch als RME bezeichnet, sind ein Gemisch von Methylestern, das aus gesättigten und ungesättigten Fettsäuren mit jeweils 16 bis 18 Kohlenstoffatomen besteht. Durch die chemische Umsetzung von raffiniertem Rapsöl mit Methanol wird Rapsmethylester als klare, dünnflüssige, brennbare und in Wasser unlösliche Flüssigkeit gewonnen.

### Definition PME:

Palmmethylester, hier auch als PME bezeichnet, sind fraktionierte Methylester und werden aus pflanzlichen Ölen gewonnen und für verschiedene Anwendungen wie Biokraftstoff, Schmierstoffe, Lösungsmittel für Körperpflegemittel, Gummiverarbeitungsmittel, Ölmittel für Textilien usw. verwendet. Methylester ist einer der wichtigsten Rohstoffe bei der Herstellung von Ester-basierten Waschmittelten wie Methylesterethoxylate (MEE), sulfonierten Methylestern (KMU), Alkanolamiden usw.

### Definition FME:

Fettmethylester, hier auch als FME bezeichnet, werden aus tierischen Fetten gewonnen.

Das erfindungsgemäße Mittel umfasst darüber hinaus ein Gemisch, welche Rhamnolipide und/oder Sophorolipide umfasst. Bei den beiden genannten Stoffen handelt es sich um sogenannte Biotenside. Diese werden gemäß der vorliegenden Patentanmeldung wie folgt definiert:

### Definition Sophorolipide:

Sophorolipide sind mikrobielle Biotenside der Glykolipidklasse, die aus einem hydrophoben Fettsäureschwanz mit 16 oder 18 Kohlenstoffatomen und einem hydrophilen Kohlenhydratkopf, Sophorose bestehen.

### Definition Rhamnolipide:

Rhamnolipide sind Biotenside, die zur Gruppe der Glykolipide gehören und hauptsächlich von Pseudomonas aeruginosa produziert werden (Abdel-Mawgoud et Einleitung 11 al., 2011). Sie setzen sich aus ein (Mono-Rhamnolipide) bis zwei (Di-Rhamnolipide) Rhamnose-Einheiten und ein bis drei β-Hydroxyfettsäuren zusammen. Die βHydroxyfettsäuren können gesättigt oder ungesättigt sein und eine Kettenlänge von 8 bis 16 Kohlenstoffatomen aufweisen.

Besonders vorteilhaft ist es, den Produkten Rhamnolipide des Stammes P. aeruginosa JRV-L zuzusetzen, deren zellfreie Kulturflüssigkeit in der Lage ist, verschiedene Kohlenwasserstoffwirkstoffe mit einem Emulgierindex E24 im Bereich von 60-80% zu emulgieren. Eine weitere Besonderheit dieser Verbindung ist die Fähigkeit, Kohlenwasserstoffe bei verschiedenen pH-Werten zu emulgieren. So können verschiedene Produkte für unterschiedliche Verschmutzungen angepasst hergestellt werden.

Besonders vorteilhaft ist es das im Rhamnolipid enthaltene natürliche Polymer Alginat mit einem Molekulargewicht von 400-600 kDa einzusetzen, da es eine hohe emulgierende Aktivität besitzt. Hierdurch können die natürlichen amphiphilen Substanzen ihre hydrophilen und hydrophoben Eigenschaften entwickeln, die es ermöglichen, sich an den Schnittstellen zwischen den flüssigen Phasen mit unterschiedlichen Polaritätsgraden zu binden. Damit findet eine optimale Emulgierung der Fette und Öle und/oder Wasser und den anhaftenden Verunreinigungen statt.

In den erfindungsgemäßen Mittel sind als Lösemittel, die gemäß einer zusätzlichen Funktion ggf. auch als Konservierungsmittel fungieren, die folgenden Bestandteile einzeln oder in Kombination enthalten:
"Demineralisiertes Wasser, Polyethylenglycol; Polysaorbat 20; Benzylalkohol; Isopropylalkohol; Ethanol; Mono Ethylenglycol; N,N-bis(carboxylatomethyl)-L-glutamat, Tetranatriumsalz ; Parametol BPX; D-Glucopyranose, Olgomere, C10-16 alkyl glycoside; Gemische aus Bernsteinsäureesther und Pflanmethylestern, Bernsteinsäureesther C4; Ethyllactat (Milchsäureethylester); Dipropylenglykoldimethylether (DPMD); Ethyl 3-Ethoxypropionat (EEP); TOU (2,5,7,10-Tetraoxaundecan), Propylencarbonat; Dibasische Ester (DBE); ter-Butylacetat (TBAC); Propylenglycol Methyletheracetat (PGMEA); 2,3-O-Isopropylidenglycerin; 3-Methoxy-3-Methyl-1-Butanol".

Ein weiterer Vorteil des erfindungsgemäße Mittels besteht darin, dass das nach der Entfettung / Reinigung verschmutzte Produkt, also das erfindungsgemäße Mittel mit der darin gelösten oder emulgierten Verschmutzung, zur Weiterverarbeitung in Biogasanlagen verwertet werden kann. Somit ist es nicht nur ökologisch sondern auch ökonomisch eine Innovation.

Die Erfindung bezieht sich gemäß einem weiteren Aspekt auf ein Mittel nach Anspruch 12.

Anstelle des Bestandteils Rhamnolipide bzw. Sophorolipide sind gemäß der Lehre des Anspruches 12 Phospholipide und /oder Glykolipide vorgesehen.

Im Übrigen gelten die zuvor vorgetragenen Argumente.

Phospholipide sind phosphorhaltige Lipide, die zur Familie der Membranlipide gehören. Man unterscheidet Phosphoglyceride und Sphingoglykolipide.

Alternativ oder zusätzlich zu Phospholipiden können auch Glykolipide eingesetzt werden. Dabei handelt es sich um phosphorfreie Strukturlipide oder Membranlipide.

Zu den Glykolipiden gehören die in Anspruch 1 bereits erwähnten Rhamnolipide und Sophorolipide sowie zusätzlich zum Beispiel noch Rhamnoselipide, Threhaloselipide und Glykosyldiglyceride.

Zu den Glykolipiden gehört insbesondere auch Sodium Surfactin, also das Salz des Surfactin. Dieses kann beispielsweise kommerziell bezogen werden unter dem Handelsnamen Kaneka Surfactin bei der Firma Kaneka Corporation mit Sitz in Osaka, Japan.

Soweit das Gemisch Phospholipide oder Glykolipide umfasst, liegen die Phospholipide bzw. die Glykolipide entweder in Reinform oder als Gemisch vor. Wenn die Phospholipide bzw. Glykolipide als Gemisch vorliegen, umfasst das Gemisch mindestens 70% Anteile Phospholipide bzw. Glykolipide.

Es genügt jeweils eine Zugabe dieser Membranlipide in Kleinstmengen. Bereits äußerst geringe Bestandteile von teilweise nur 0,01 % in dem Mittel führen dazu, dass eine erhebliche Reduktion der Oberflächenspannung erreicht werden kann.

Die Erfindung erkennt insbesondere auch, dass hohe Anteile des FAME-Bestandteils in dem Mittel besonders vorteilhaft sind. Insbesondere hat sich herausgestellt, dass hohe Anteile an FAME, insbesondere von mehr als 20 %, weiter vorteilhafterweise von mehr als 40 %, weiter vorteilhafterweise von mehr als 60 %, weiter vorteilhafterweise von mehr als 80 %, eine besonders gute Emulgation der Verschmutzungen zulässt.

Sofern in der vorliegenden Patentanmeldung verschiedene Membranlipide erwähnt und als Bestandteil des erfindungsgemäßen Mittels vorgeschlagen werden, wie beispielsweise Phospholipide oder Glykolipide, insbesondere Rhamnolipide, ist von der Erfindung auch umfasst, wenn in dem Mittel ein Gemisch mehrerer dieser unterschiedlichen Membranlipide als Bestandteil vorgesehen wird.

Ausführungsbeispiele der Erfindung sind nachfolgend beispielhaft beschrieben.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Nachfolgend wird eine Vielzahl von Ausführungsbeispielen von verschiedenen Zusammensetzungen für als ein Schmierfettlöser ausgebildeten erfindungsgemäßen Mittels dargestellt. Sämtliche Ausführungsbeispiele haben bei Raumtemperatur eine vollständige Auflösung von Verschmutzungen, wie beispielsweise Panzerkettenöl oder in der Eisenbahntechnik eingesetzter Schmieröle ermöglicht von insbesondere metallischen Oberflächen:
Bei den nachfolgenden Ausführungsbeispielen bedeutet die Formulierung "ad.", dass eine Auffüllung auf 100% mit dem entsprechenden Bestandteil erfolgt.

**Schmierfettlöser Beispiel 1:**

| | |
|---|---|
| Rapsmethylester | 93 % |
| Dibasische Ester | 2,5 % |
| Isopropylalkohol | 4 % |
| Rhamnolipide - Gemisch ( mind. 1 % Pyroverdine und Alginate) | 0,5 % |

**Schmierfettlöser Beispiel 2:**

| | |
|---|---|
| Rapsmethylester | 93 % |
| Dibasische Ester | 2,5 % |
| Isopropylalkohol | 4 % |
| Rhamnolipide | 0,5 % |

**Schmierfettlöser Beispiel 3:**

| | |
|---|---|
| Rapsmethylester | 80 % |
| Dibasische Ester | 2,5 % |
| Isopropylalkohol | 4 % |
| Rhamnolipide - Gemisch (mind. 1 % Pyroverdine und Alginate) | 0,5 % |
| Wasser demineralisiert | ad. |

**Schmierfettlöser Beispiel 4:**

| | |
|---|---|
| Rapsmethylester | 93 % |
| Dibasische Ester | 2,5 % |
| Isopropylalkohol | 4 % |
| Rhamnolipide - Gemisch (mind. 1 % Pyroverdine und Alginate) | 0,5 % |

**Schmierfettlöser Beispiel 5:**

| | |
|---|---|
| Rapsmethylester | 80 % |
| Dibasische Ester | 2,5 % |
| Isopropylalkohol | 4 % |
| Rhamnolipid - Gemisch (mind. 1 % Pyroverdine und Alginate) | 0,5 % |
| Nichtionisches Tensid | 2,9 % |
| Wasser demineralisiert | ad. |

**Schmierfettlöser Beispiel 6:**

| | |
|---|---|
| Rapsmethylester | 90,1 % |
| Dibasische Ester | 2,5 % |
| Isopropylalkohol | 4 % |
| Rhamnolipide - Gemisch (mind. 1 % Pyroverdine und Alginate) | 0,5 % |
| Nichtionisches Tensid | 2,9 % |

**Schmierfettlöser Beispiel 7:**

| | |
|---|---|
| Rapsmethylester | 93 % |
| Dibasische Esther | 2,5 % |
| Isopropylalkohol | 4 % |
| Rhamnolipid - Gemisch (mind. 1 % Pyroverdine und Alginate) | 0,5 % |
| Nichtionisches Tensid | 2,9 % |
| Wasser demineralisiert | ad. |

**Schmierfettlöser Beispiel 8:**

| | |
|---|---|
| Rapsmethylester | 92,5 % |
| Dibasische Esther | 2,5 % |
| Isopropylalkohol | 4 % |
| Rhamnolipid - Gemisch (mind. 1 % Pyroverdine und Alginate) | 0,5 % |
| Sophorlipide | 0,5 % |

**Schmierfettlöser Beispiel 9:**

| | |
|---|---|
| Rapsmethylester | 93 % |
| Dibasische Ester | 2,5 % |
| Isopropylalkohol | 4 % |
| Sophorlipid | 0,5 % |

**Schmierfettlöser Beispiel 10:**

| | |
|---|---|
| Rapsmethylester | 80 % |
| Dibasische Ester | 2,5 % |
| Isopropylalkohol | 4 % |
| Sophorlipid | 0,5 % |
| Rhamnolipid - Gemisch (mind. 1 % Pyroverdine und Alginate) | 0,5 % |
| Wasser demineralisiert | ad. |

**Schmierfettlöser Beispiel 11:**

| | |
|---|---|
| Rapsmethylester | 90 % |
| Dibasische Ester | 2,5 % |
| Isopropylalkohol | 4 % |
| Rhamnolipid | 0,5 % |
| Sophorlipid | 0,5 % |

**Schmierfettlöser Beispiel 12:**

| | |
|---|---|
| Rapsmethylester | 80 % |
| Dibasische Ester | 2,5 % |
| Isopropylalkohol | 4 % |
| Rhamnolipid - Gemisch (mind. 1 % Pyroverdine und Alginate) | 0,5 % |
| Sophorlipid | 0,5 % |
| Nichtionisches Tensid | 2,9 % |
| Wasser demineralisiert | ad. |

**Schmierfettlöser Beispiel 13:**

| | |
|---|---|
| Rapsmethylester | 93 % |
| Milchsäureethylester | 2,5 % |
| Isopropylalkohol | 4 % |
| Rhamnolipid - Gemisch (mind. 1 %Pyroverdine und Alginate) | 0,5 % |

**Schmierfettlöser Beispiel 14:**

| | |
|---|---|
| Rapsmethylester | 93 % |
| Milchsäureethylester | 2,5 % |
| Isopropylalkohol | 4 % |
| Rhamnolipid | 0,5 % |

**Schmierfettlöser Beispiel 15:**

| | |
|---|---|
| Rapsmethylester | 80 % |
| Milchsäureethylester | 2,5 % |
| Dibasische Ester | 2,5 % |
| Isopropylalkohol | 4 % |
| Rhamnolipid - Gemisch (mind. 1 % Pyroverdine und Alginate) | 0,5 % |
| Wasser demineralisiert | ad. |

**Schmierfettlöser Beispiel 16:**

| | |
|---|---|
| Rapsmethylester | 93 % |
| Milchsäureethylester | 2,5 % |
| Dibasische Ester | 2,5 % |
| Isopropylalkohol | 4 % |
| Rhamnolipid - Gemisch (mind. 1 % Pyroverdine und Alginate) | |
| | 0,5 % |

**Schmierfettlöser Beispiel 17:**

| | |
|---|---|
| Rapsmethylester | 80 % |
| Milchsäureethylester | 2,5 % |
| Isopropylalkohol | 4 % |
| Rhamnolipid - Gemisch (mind. 1 % Pyroverdine und Alginate) | 0,5 % |
| Nichtionisches Tensid | 2,9 % |
| Wasser demineralisiert | ad. |

**Schmierfettlöser Beispiel 18:**

| | |
|---|---|
| Rapsmethylester | 90,1 % |
| Milchsäureethylester | 2,5 % |
| Isopropylalkohol | 4 % |
| Rhamnolipid - Gemisch (mind. 1 % Pyroverdine und Alginate) | 0,5 % |
| Nichtionisches Tensid | 2,9 % |

**Schmierfettlöser Beispiel 19:**

| | |
|---|---|
| Rapsmethylester | 90 % |
| Milchsäureethylester | 2,5 % |
| Isopropylalkohol | 4 % |
| Rhamnolipid - Gemisch (mind. 1 % Pyroverdine und Alginate) | 0,5 % |
| Nichtionisches Tensid | 2,9 % |
| Wasser demineralisiert | ad. |

**Schmierfettlöser Beispiel 20:**

| | |
|---|---|
| Rapsmethylester | 92,5 % |
| Milchsäureethylester | 2,5 % |
| Isopropylalkohol | 4 % |
| Rhamnolipid - Gemisch (mind. 1 % Pyroverdine und Alginate) | 0,5 % |
| Sophorlipide | 0,5 % |

**Schmierfettlöser Beispiel 21:**

| | |
|---|---|
| Rapsmethylester | 93 % |
| Dipropylene Glycol Dimethyl Ether (DPGDME) | 2,5 % |
| Isopropylalkohol | 4 % |
| Rhamnolipide - Gemisch (mind. 1 % Pyroverdine und Alginate) | 0,5 % |

**Schmierfettlöser Beispiel 22:**

| | |
|---|---|
| Rapsmethylester | 93 % |
| Dipropylene Glycol Dimethyl Ether (DPGDME) | 2,5 % |
| Isopropylalkohol | 4 % |
| Rhamnolipide | 0,5 % |

**Schmierfettlöser Beispiel 23:**

| | |
|---|---|
| Rapsmethylester | 80 % |
| Dipropylene Glycol Dimethyl Ether (DPGDME) | 2,5 % |
| Isopropylalkohol | 4 % |
| Rhamnolipide - Gemisch (mind. 1 % Pyroverdine und Alginate) | 0,5 % |
| Wasser demineralisiert | ad. |

**Schmierfettlöser Beispiel 24:**

| | |
|---|---|
| Rapsmethylester | 93 % |
| Ethyl-Ethoxy-Propionate (EEP) | 2,5 % |
| Isopropylalkohol | 4 % |
| Rhamnolipide - Gemisch ( mind. 1 % Pyroverdine und Alginate) | 0,5 % |

**Schmierfettlöser Beispiel 25:**

| | |
|---|---|
| Rapsmethylester | 93 % |
| Ethyl-Ethoxy-Propionate (EEP) | 2,5 % |
| Isopropylalkohol | 4 % |
| Rhamnolipide | 0,5 % |

**Schmierfettlöser Beispiel 26:**

| | |
|---|---|
| Rapsmethylester | 80 % |
| Ethyl-Ethoxy-Propionate (EEP) | 2,5 % |
| Isopropylalkohol | 4 % |
| Rhamnolipide - Gemisch (mind. 1 % Pyroverdine und Alginate) | 0,5 % |
| Wasser demineralisiert | ad. |

**Schmierfettlöser Beispiel 27:**

| | |
|---|---|
| Rapsmethylester | 90,1 % |
| Ethylacetat | 2,9 % |
| Isopropylalkohol | 6,5 % |
| Rhamnolipide - Gemisch ( mind. 1 % Pyroverdine und Alginate) | 0,5 % |

**Schmierfettlöser Beispiel 28:**

| | |
|---|---|
| Rapsmethylester | 90,1 % |
| Ethylacetat | 2,9 % |
| Isopropylalkohol | 6,5 % |
| Rhamnolipide | 0,5 % |

**Schmierfettlöser Beispiel 29:**

| | |
|---|---|
| Rapsmethylester | 80 % |
| Ethyl-Ethoxy-Propionate (EEP) | 2,5 % |
| Isopropylalkohol | 4 % |
| Rhamnolipide - Gemisch (mind. 1 % Pyroverdine und Alginate) | 0,5 % |
| Wasser demineralisiert | ad. |

**Schmierfettlöser Beispiel 30:**

| | |
|---|---|
| Rapsmethylester | 90,1 % |
| Ethylen Carbonat | 2,9 % |
| Isopropylalkohol | 6,5 % |
| Rhamnolipide - Gemisch ( mind. 1 % Pyroverdine und Alginate) | 0,5 % |

**Schmierfettlöser Beispiel 31:**

| | |
|---|---|
| Rapsmethylester | 90,1 % |
| Ethylen Carbonat | 2,9 % |
| Isopropylalkohol | 6,5 % |
| Rhamnolipide | 0,5 % |

**Schmierfettlöser Beispiel 32:**

| | |
|---|---|
| Rapsmethylester | 90,1 % |
| Propylen Carbonat | 2,9 % |
| Isopropylalkohol | 6,5 % |
| Rhamnolipide - Gemisch (mind. 1 % Pyroverdine und Alginate) | 0,5 % |

**Schmierfettlöser Beispiel 33:**

| | |
|---|---|
| Rapsmethylester | 90,1 % |
| Propylen Carbonat | 2,9 % |
| Isopropylalkohol | 6,5 % |
| Rhamnolipide | 0,5 % |

**Schmierfettlöser Beispiel 34:**

| | |
|---|---|
| Rapsmethylester | 90,1 % |
| 3-Methoxy-3-Methyl-1-Butanol Acetate | 2,9 % |
| Isopropylalkohol | 6,5 % |
| Rhamnolipide - Gemisch (mind. 1 % Pyroverdine und Alginate) | 0,5 % |

**Schmierfettlöser Beispiel 35:**

| | |
|---|---|
| Rapsmethylester | 90,1 % |
| 3-Methoxy-3-Methyl-1-Butanol Acetate | 2,9 % |
| Isopropylalkohol | 6,5 % |
| Rhamnolipide | 0,5 % |

**Schmierfettlöser Beispiel 36:**

| | |
|---|---|
| Rapsmethylester | 90,1 % |
| 3-Methoxy-3-Methyl-1-Butanol | 2,9 % |
| Isopropylalkohol | 6,5 % |
| Rhamnolipide - Gemisch (mind. 1 % Pyroverdine und Alginate) | 0,5 % |

**Schmierfettlöser Beispiel 37:**

| | |
|---|---|
| Rapsmethylester | 90,1 % |
| 3-Methoxy-3-Methyl-1-Butanol | 2,9 % |
| Isopropylalkohol | 6,5 % |
| Rhamnolipide | 0,5 % |

**Schmierfettlöser Beispiel 38:**

| | |
|---|---|
| Rapsmethylester | 90,1 % |
| 3-Methoxy-3-Methyl-1-Butanol Acetate | 2,9 % |
| Wasser deminaeralisiert | 6,5 % |
| Rhamnolipide - Gemisch (mind. 1 % Pyroverdine und Alginate) | 0,5 % |

**Schmierfettlöser Beispiel 39:**

| | |
|---|---|
| Rapsmethylester | 90,1 % |
| 3-Methoxy-3-Methyl-1-Butanol Acetate | 2,9 % |
| Wasser demineralisiert | 6,5 % |
| Rhamnolipide | 0,5 % |

**Schmierfettlöser Beispiel 40:**

| | |
|---|---|
| Rapsmethylester | 90,1 % |
| 3-Methoxy-3-Methyl-1-Butanol | 2,9 % |
| Wasser demineralisiert | 6,5 % |
| Rhamnolipide - Gemisch (mind. 1 % Pyroverdine und Alginate) | 0,5 % |

**Schmierfettlöser Beispiel 41:**

| | |
|---|---|
| Rapsmethylester | 90,1 % |
| 3-Methoxy-3-Methyl-1-Butanol | 2,9 % |
| Isopropylalkohol | 3,5 % |
| Wasser demineralisert | 3,0 % |
| Rhamnolipide | 0,5 % |

**Schmierfettlöser Beispiel 42:**

| | |
|---|---|
| Rapsmethylester | 79,5 % |
| 3-Methoxy-3-Methyl-1-Butanol | 4,5 % |
| Alkohol | 6,0 % |
| 3-Methoxy-3-Methyl-1-Butanol Acetate | 6,7 % |
| C10 Alkoholethoxylat 4 EO | 1,0 % |
| C10 Alkoholethoxylat 5,5 EO | 2,0 % |
| Rhamnolipide | 0,3 % |

**Schmierfettlöser Beispiel 43:**

| | |
|---|---|
| Rapsmethylester | > 70,0 % |
| 3-Methoxy-3-Methyl-1-Butanol | > 2,9 % |
| Alkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 44:**

| | |
|---|---|
| Rapsmethylester | > 70,0 % |
| 3-Methoxy-3-Methyl-1-Butanol | > 2,9 % |
| Alkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Sodium Surfactin | > 0,01 % |

**Schmierfettlöser Beispiel 45:**

| | |
|---|---|
| Rapsmethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 46:**

| | |
|---|---|
| Rapsmethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 47:**

| | |
|---|---|
| Rapsmethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Sodium Surfactin | > 0,01 % |

**Schmierfettlöser Beispiel 48:**

| | |
|---|---|
| Rapsmethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 49:**

| | |
|---|---|
| Rapsmethylester | > 50,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 50:**

| | |
|---|---|
| Rapsmethylester | > 50,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| C10 Alkoholethoxylat 4 EO | > 2,9 % |
| C10 Alkoholethoxylat 5,5 EO | > 2,9 % |
| Sodium Surfactin | > 0,01 % |

**Schmierfettlöser Beispiel 51:**

| | |
|---|---|
| Rapsmethylester | > 70,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| Rhamnolipide | > 0,01 % |

**Schmierfettlöser Beispiel 52:**

| | |
|---|---|
| Rapsmethylester | > 70,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| Rhamnolipide | > 0,01 % |

**Schmierfettlöser Beispiel 53:**

| | |
|---|---|
| Fettsäuremethylester | > 70,0 % |
| 3-Methoxy-3-Methyl-1-Butanol | > 2,9 % |
| Alkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 54:**

| | |
|---|---|
| Fettsäuremethylester | > 70,0 % |
| 3-Methoxy-3-Methyl-1-Butanol | > 2,9 % |
| Alkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Sodium Surfactin | > 0,01 % |

**Schmierfettlöser Beispiel 55:**

| | |
|---|---|
| Fettsäuremethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 56:**

| | |
|---|---|
| Fettsäuremethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 57:**

| | |
|---|---|
| Fettsäuremethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Sodium Surfactin | > 0,01 % |

**Schmierfettlöser Beispiel 58:**

| | |
|---|---|
| Fettsäuremethylester | > 70,0 % |
| 3-Methoxy-3-Methyl-1-Butanol | > 2,9 % |
| Isopropylalkohol | > 2,9 % |
| 3-Methoxy-3-Methyl-1-Butanol Acetate | > 2,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 59:**

| | |
|---|---|
| Fettsäuremethylester | > 50,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 60:**

| | |
|---|---|
| Fettsäuremethylester | > 50,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| C10 Alkoholethoxylat 4 EO | > 2,9 % |
| C10 Alkoholethoxylat 5,5 EO | > 2,9 % |
| Rhamnolipide | > 0,01 % |

**Schmierfettlöser Beispiel 61:**

| | |
|---|---|
| Fettsäuremethylester | > 70,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| Sodium Surfactin | > 0,01 % |

**Schmierfettlöser Beispiel 62:**

| | |
|---|---|
| Fettsäuremethylester | > 70,0 % |
| 3-Methoxy-3-Methyl-1-Butanol | > 4,9 % |
| Alkohol | > 2,9 % |
| 3-Methoxy-3-Methyl-1-Butanol Acetate | > 5,9 % |
| Rhamnolipide | > 0,01 % |

Gemäß dem erfindungsgemäßen Verfahren können Verschmutzungen von Oberflächen, z. B. von metallischen Oberflächen, wie folgt entfernt werden:
Zunächst wird ein Mittel der erfindungsgemäßen, vorbeschriebenen Art aufgebracht. Das Aufbringen kann beispielsweise durch Sprühen, oder durch Eintauchen des die Oberfläche aufweisenden Gegenstandes in ein Tauchbad, oder durch Bedampfen, oder Vernebeln, oder durch Auftropfen erfolgen.

In einem weiteren Schritt lässt man das Mittel auf die Verschmutzung einwirken. Die Zeitdauer hängt von der Art der Verschmutzung und von der Art des verwendeten Mittels ab. Die Zeitdauer kann wenige Sekunden bis viele Minuten, ggf. sogar mehrere Stunden, betragen. Im Zuge des Einwirkenlassens kann die Verschmutzung teilweise oder vollständig in dem Mittel emulgiert werden, und von der zu reinigenden Oberfläche gelöst werden.

In einem letzten Schritt wird die gelöste Verschmutzung, also das Mittel mit darin emulgierter Verschmutzung, von der Oberfläche abgespült. Das Abspülen kann durch Besprühen mit Wasser, oder wiederum durch ein Tauchbad, erfolgen. Es können auch zusätzlich und/oder alternativ mechanische Reinigungsschritte, wie beispielsweise eine Beaufschlagung der Oberfläche mit mechanischen rotierenden Bürsten erfolgen.

Das Mittel und die darin gelöste Verschmutzung können aufgefangen werden. Gemäß einer vorteilhaften Ausgestaltung kann das Mittel und die darin gelöste Verschmutzung in einer Biogasanlage verwertet werden.

Alternativ kann auch eine bakterielle Verwertung erfolgen:
Das Mittel und die darin gelöste Verschmutzung sind biologisch abbaubar.

Die Verwendung des Mittels kann im Rahmen eines Kreislaufes erfolgen. Das Mittel ist mehrfach verwendbar, bis die Emulgationskraft unter einen Schwellwert abgesunken ist.

Das erfindungsgemäße Mittel liegt vorteilhafterweise als Flüssigkeit vor. Dies ermöglicht eine einfache Handhabung, insbesondere ein Aufsprühen auf die Verschmutzung.

Das erfindungsgemäße Mittel weist eine Vielzahl von Vorteilen auf:
So kann das Mittel bei Raumtemperatur eingesetzt werden, und verlangt keinen besonderen Temperaturbereich.

Das eingesetzte Mittel ist aus Umweltschutz- und gesundheitlichen Erwägungen her unproblematisch. Es ist zum einen biologisch abbaubar. Zum anderen bestehen keine gesundheitlichen Risiken.

Von dem erfindungsgemäßen Mittel geht auch keine Brand- oder Explosionsgefahr aus.

Es ist schließlich auch receyclebar.

Es ist schließlich auch geruchlos; zumindest sind Geruchsbelästigungen ausgeschlossen.

Das erfindungsgemäße Mittel ist emulgationsfähig, d. h., es kann die zu lösenden Verschmutzungen teilweise oder vollständig in sich auflösen.

Schließlich kann das erfindungsgemäße Mittel auch mit Lebensmitteln in Kontakt kommen, so dass ein Einsetzen in der Lebensmittelindustrie möglich ist.

Im folgenden soll erläutert werden, was die Erfindung unter Rhamnolipiden versteht:
Rhamnolipide insbesondere vom Stamm Pseudomonas aeruginosa, sind Biotenside, die aus Rhamnose-Zucker und β-Hydroxydecansäure in unterschiedlichem Verhältnis bestehen. Abhängig von der Anzahl der Rhamnose-Moleküle spricht man auch von Mono- oder Di-Rhamnolipiden.

Rhamnolipide sind bereits Gegenstand umfangreicher wissenschaftlicher Untersuchungen gewesen. Insbesondere wird verwiesen auf die Dissertation von Frau Dipl.-Biol. (t. o.) Barbara Hörmann vom 26. Oktober 2012 der Fakultät für Chemieingenieurwesen und Verfahrenstechnik des Karlsruher Institut für Technologie (KIT) und die dort verwendeten Begrifflichkeiten zu dem Begriff Rhamnolipide. Diese werden von dieser Patentanmeldung in Bezug genommen.

Rhamnolipide konnten bislang nur in kleinsten Mengen hergestellt werden.

Jüngst ist es der Biotensidon GmbH mit Sitz in Karlsruhe gelungen, einen nicht-patogenen Wildtyp vom Stamm Pseudomonas aeruginosa zu identifizieren, mit dem unter regulärem Laborstandard gearbeitet werden kann. Der spezielle Stamm produziert ein Rhamnolipidgemisch, der Rhamnolipide RL3 und RL4. Eine Produktion in einem Fermenter-Prototypen erlaubt eine Massenfertigung der Rhamnolipide und somit erstmals die Möglichkeit, Rhamnolipide auch in großem industriellen Maßstab einzusetzen.

Phospholipide können beispielsweise von der Lecico GmbH mit Sitz in Hamburg kommerziell erworben werden.

## Patentansprüche

1. Mittel zum Emulgieren und/oder zum Entfernen von Verschmutzungen, wie ölhaltigen Stoffen, Schmierstoffen, Klebstoffen oder dergleichen, von Oberflächen, umfassend mindestens die folgenden Bestandteile
a) FAME,
b) ein Gemisch, umfassend:
i) Rhamnolipide und/oder Sophorolipide,
ii) Lösemittel,
wobei FAME wenigstens einen Stoff aus der folgenden Gruppe von Stoffen umfasst:
"FME, SME, RME, PME",
und wobei die Rhamnolipide in Reinform oder als Gemisch vorliegen, wobei das Gemisch mindestens 70 % Anteile Rhamnolipide umfasst, und
wobei das Lösemittel wenigstens einen Stoff aus der nachfolgenden Gruppe von Stoffen umfasst:
"Demineralisiertes Wasser, Polyethylenglycol; Polysaorbat 20; Benzylalkohol; Isopropylalkohol; Ethanol; Mono Ethylenglycol; N,N-bis(carboxylatomethyl)-L-glutamat, Tetranatriumsalz; D-Glucopyranose, Olgomere, C10-16 alkyl glycoside; Gemische aus Bernsteinsäureesther und Pflanzenmethylestern; Bernsteinsäureesther C4; Ethyllactat (Milchsäureethylester); Dipropylenglykoldimethylether (DPMD); Ethyl 3-Ethoxypropionat (EEP); TOU (2,5,7,10-Tetraoxaundecan), Propylencarbonat; Dibasische Ester (DBE); ter-Butylacetat (TBAC); Propylenglycol Methyletheracetat (PGMEA); 2,3-O-Isopropylidenglycerin; 3-Methoxy-3-Methyl-1-Butanol, MMB-Ac (3-Methoyx-3-Methyl-1-Butanol Acetate)".

2. Mittel nach Anspruch 1, **dadurch gekennzeichnet, dass** das Rhamnolipid-Gemisch wenigstens 0,1 % Alginat-Anteil und/oder mindestens 0,1 % Pyroverdin-Anteil, umfasst.

3. Mittel nach Anspruch 1 oder 2, **dadurch gekennzeichnet, dass** das Rhamnolipid zumindest teilweise dem Stamm Pseudomas aeruginosa JRV-L entstammt.

4. Mittel nach einem der vorangegangenen Ansprüche, **dadurch gekennzeichnet, dass** dem Mittel als Lösemittel demineralisiertes Wasser mit einem Anteil von mindestens 1%, insbesondere von mindestens 5%, weiter insbesondere von mindestens 10%, weiter insbesondere von mindestens 50% zugesetzt worden sind.

5. Mittel nach einem der vorangegangenen Ansprüche, **dadurch gekennzeichnet, dass** das Mittel als zusätzlichen Bestandteil wenigstens ein Tensid, insbesondere ein anionisches, und/oder nichtinionisches und/oder amphoteres Tensid, aufweist.

6. Verfahren zum Entfernen von Verschmutzungen von Oberflächen, umfassend die folgenden Schritte:
a) Aufbringen eines Mittels nach einem der vorherigen Ansprüche oder eines Mittels nach Anspruch 12 auf der mit einer Verschmutzung versehenen Oberfläche,
b) Einwirkenlassen des Mittels auf die Verschmutzung zum Emulgieren oder Lösen der Verschmutzung von der Oberfläche,
c) Abspülen der gelösten Verschmutzung von der Oberfläche, beispielsweise durch Besprühen mit Wasser.

7. Verfahren nach Anspruch 6, **gekennzeichnet durch** Schritt:
d) Auffangen des verwendeten Mittels mit der von der Oberfläche gelösten Verschmutzung.

8. Verfahren nach Anspruch 7, **gekennzeichnet durch** den Schritt:
e) Verwerten der gelösten Verschmutzung in einer Biogasanlage.

9. Verfahren nach Anspruch 7 oder 8, **gekennzeichnet durch** den Schritt
f) Wiederholung der Schritte a) bis d) an einer anderen Oberfläche oder an einem anderen Bereich der Oberfläche zum Lösen weiterer Verschmutzungen.

10. Verfahren nach einem der Ansprüche 6 bis 9, **dadurch gekennzeichnet, dass** das Mittel auf die mit Verschmutzungen versehende Oberfläche aufgesprüht wird.

11. Verfahren nach einem der Ansprüche 6 bis 10, **dadurch gekennzeichnet, dass** nach dem Aufbringen bzw. Aufsprühen des Mittels auf die Verschmutzung unter Zuhilfenahme mechanischer Bürsten eine Reinigung der Oberfläche erfolgt.

12. Mittel zum Emulgieren und/oder zum Entfernen von Verschmutzungen, wie ölhaltigen Stoffen, Schmierstoffen, Klebstoffen oder dergleichen, von Oberflächen, umfassend mindestens die folgenden Bestandteile
a) FAME,
b) ein Gemisch, umfassend:
i) Phospholipide und/oder Glykolipide,
ii) Lösemittel,
wobei FAME wenigstens einen Stoff aus der folgenden Gruppe von Stoffen umfasst:
"FME, SME, RME, PME",
wobei das Lösemittel wenigstens einen Stoff aus der nachfolgenden Gruppe von Stoffen umfasst:
"Demineralisiertes Wasser, Polyethylenglycol; Polysaorbat 20; Benzylalkohol; Isopropylalkohol; Ethanol; Mono Ethylenglycol; N,N-bis(carboxylatomethyl)-L-glutamat, Tetranatriumsalz; D-Glucopyranose, Olgomere, C10-16 alkyl glycoside; Gemische aus Bernsteinsäureesther und Pflanzenmethylestern; Bernsteinsäureesther C4; Ethyllactat (Milchsäureethylester); Dipropylenglykoldimethylether (DPMD); Ethyl 3-Ethoxypropionat (EEP); TOU (2,5,7,10-Tetraoxaundecan), Propylencarbonat; Dibasische Ester (DBE); ter-Butylacetat (TBAC); Propylenglycol Methyletheracetat (PGMEA); 2,3-O-Isopropylidenglycerin; 3-Methoxy-3-Methyl-1-Butanol, MMB-Ac (3-Methoyx-3-Methyl-1-Butanol Acetate)".

13. Mittel nach einem der Ansprüche 1 bis 5 oder nach Anspruch 12, **dadurch gekennzeichnet, dass** der Anteil des Bestandteils FAME in dem Mittel mindestens 10 %, vorteilhafterweise mindestens 20 %, weiter vorteilhafterweise mindestens 30 %, weiter vorteilhafterweise mindestens 40 %, weiter vorteilhafterweise mindestens 50 %, weiter vorteilhafterweise mindestens 60 %, weiter vorteilhafterweise mindestens 70 %, weiter vorteilhafterweise mindestens 80 %, beträgt.
